# EUROPEAN PATENT SPECIFICATION

(11) **EP 3 637 288 B1**
(45) Date of publication and mention of the grant of the patent: **06.04.2022**
(21) Application number: 18806666.6
(22) Date of filing: 21.05.2018
(51) Int. Cl.: G06F 21/30, H04L 9/32, G06F 21/74, G06F 21/53

(54) **METHOD, APPARATUS AND SYSTEMS FOR ACCESSING SECURE WORLD**
VERFAHREN, VORRICHTUNG UND SYSTEME ZUM ZUGRIFF AUF EINE SICHERE WELT
PROCÉDÉ, APPAREIL ET SYSTÈMES POUR ACCÉDER À UN MONDE SÉCURISÉ

(30) Priority: 22.05.2017 CN 201710364027
(43) Date of publication of application: 15.04.2020
(73) Proprietor: Huawei Technologies Co., Ltd., Longgang District Shenzhen, Guangdong 518129 (CN)
(72) Inventor: DU, Xiaoqiang, Shenzhen, Guangdong 518129 (CN)
(74) Representative: Maiwald Patent- und Rechtsanwaltsgesellschaft mbH
(86) International application number: PCT/CN2018/087699
(87) International publication number: WO 2018/214850

(56) References cited:
- CN-A- 102 214 277
- CN-A- 102 214 277
- CN-A- 105 022 954
- CN-A- 105 022 954
- CN-A- 105 630 534
- CN-A- 105 723 375
- CN-A- 105 787 391
- US-A1- 2015 082 304
- US-A1- 2015 150 127
- SUN HE ET AL: "TrustICE: Hardware-Assisted Isolated Computing Environments on Mobile Devices", 2015 45TH ANNUAL IEEE/IFIP INTERNATIONAL CONFERENCE ON DEPENDABLE SYSTEMS AND NETWORKS, IEEE, 22 June 2015 (2015-06-22), pages 367-378, XP033205366, DOI: 10.1109/DSN.2015.11 [retrieved on 2015-09-14]

## Description

This application claims priority to Chinese Patent Application No. 201710364027.2, filed with the Chinese Patent Office on May 22, 2017 and entitled "SECURE WORLD ACCESS METHOD, APPARATUS, AND SYSTEM".

### TECHNICAL FIELD

This application relates to the computer field, and more specifically, to a Secure World access method, apparatus, and system.

### BACKGROUND

US2015/082304A1 describes that a virtual machine manager facilitates selective code integrity enforcement. It is described that a virtual machine manager (or other higher privileged entity) can verify the integrity of code in memory pages, and a virtual processor running in kernel mode executes the code on a memory page only if the virtual machine manager (or other higher privileged entity) has verified the code integrity of that code. It is described that the virtual machine manager need not verify the integrity of code in memory pages when the virtual processor is running in user mode, rather an operating system running on the virtual processor can apply any of a variety of policies (e.g., optionally perform any of a variety of different checks or verifications of the code) to determine whether the code can be executed in user mode.

CN105022954A describes a dynamic running method for a security kernel service of a tristate operating system in a Feiteng CPU. The method comprises the steps of: dividing a kernel into a system state and a kernel state of different privilege levels; establishing a service framework in the kernel state to serve as a container for the security kernel service, and establishing a call interface for the security kernel service; establishing a virtual driving interface in the system state to support a user state to call the security kernel service; loading the service framework and the built-in security kernel service after enabling the CPU to be powered on; and loading a loading part of a system service module and starting a system service, wherein the service framework provides the security kernel service and makes a response to a dynamic loading/unloading request of the security kernel service.

A concept of a TrustZone (TrustZone) is introduced in an advanced reduced instruction set computer (Reduced Instruction Set Computer, RISC) machines (Advanced RISC Machine, ARM) processor in an architecture v6. The TrustZone is a unique processor mode of the ARM processor.

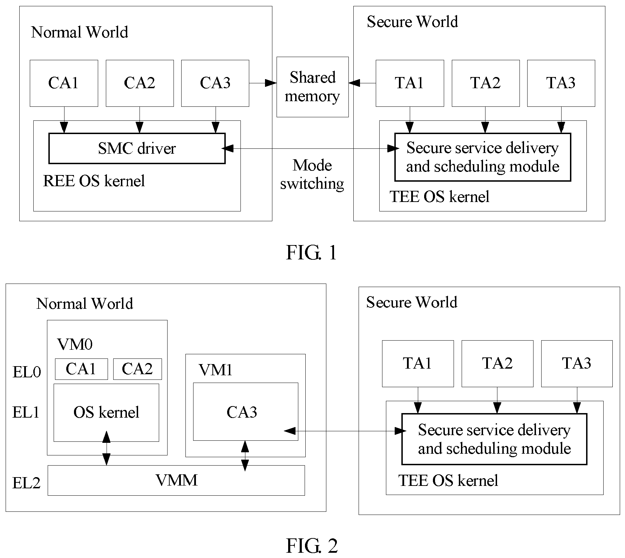

As shown in FIG. 1, a computer system is physically divided into a Secure World and a Normal World by using a TrustZone technology. An area in the TrustZone is the Secure World, and an area outside the TrustZone is the Normal World.

In an architecture shown in FIG. 1, a client application (Client Application, CA) (or may be referred to as a user program or the like) may access the Secure World by invoking a common secure monitor call (Secure Monitor Call, SMC) driver.

For ease of understanding, the following describes a method for accessing the Secure World by a user program from the Normal World with reference to the architecture shown in FIG. 1. A secure service procedure may be completed by using a secure service channel. The architecture shown in FIG. 1 may be implemented by using a secure service channel including an SMC driver of the Normal World, an SMC instruction of the Normal World, runtime firmware (runtime firmware), a secure service delivery and scheduling module of a kernel of the Secure World, and a secure user program.

Step 1: A CA program (for example, a CA1, a CA2, or a CA3) invokes an application programming interface (Application Programming Interface, API) provided based on a common SMC driver, and transmits a parameter to an SMC driver of a rich execution environment (Rich Execution Environment, REE) operating system (Operation System, OS) kernel.

Step 2: The SMC driver writes the parameter into a register, calls the SMC instruction, and triggers an exception event.

Step 3: After taking over the exception event, the runtime firmware switches a system mode, and calls a function related to a secure service delivery and scheduling module in a Trusted Execution Environment (Trusted Execution Environment, TEE) OS kernel.

Step 4: The secure service delivery and scheduling module further parses the parameter, and analyzes a parameter parsing result, to schedule a related trusted application (Trusted Application, TA) program.

Step 5: The TA program (for example, a TA1, a TA2, or a TA3 shown in FIG. 1) confirms validity by using a universally unique identifier (Universally Unique Identifier, UUID) transmitted by an application in the Normal World, and completes a related secure service.

In the foregoing procedure in which the CA program obtains the secure service, the common SMC driver may be used by any program (including a malicious program). Consequently, the malicious program may access the Secure World, and security of the Secure World is reduced.

### SUMMARY

This application provides a Secure World access method, apparatus, and system, to improve security of a Secure World.

According to a first aspect, a Secure World access method is provided, including: creating a first virtual machine (Virtual Machine, VM) in a Normal World; loading a plurality of programs in the Normal World to the first virtual machine, where the plurality of programs include a kernel and at least one user program, the kernel runs in a first-level mode, the at least one user program runs in a second-level mode, and the first level is higher than the second level; when it is determined that a first user program in the at least one user program needs to access a Secure World, creating, in the Normal World, a second virtual machine running in the first-level mode; and stripping the first user program from the first virtual machine, and loading the first user program to the second virtual machine, so that the first user program accesses the Secure World by using the second virtual machine.

Therefore, in the solution, a common SMC driver is no longer deployed in an operating system kernel of the Normal World, and an ordinary program (including a malicious program) cannot obtain secure service call by invoking the common SMC driver. In addition, to facilitate a user program to access the Secure World, a virtual machine that works in a same level as the kernel may be created, so that a user program that needs to access the Secure World may access the Secure World by using the virtual machine that works in the same level as the kernel, and does not need to access the Secure World through the common SMC driver. Therefore, security of the Secure World may be improved while access to the Secure World accessing is implemented.

Further, because a level of the second virtual machine is the same as a level of the kernel, information returned by a program in the Secure World to the first user program may be directly received by the first user program by using the second virtual machine instead of the shared kernel, to greatly avoid a case in which the returned information is snooped or tampered with by the kernel, or avoid a case in which another malicious program snoops or tampers with the returned information by using the kernel.

With reference to the first aspect, in a possible implementation of the first aspect, the method further includes: setting a virtualization list, to prohibit all programs in the first virtual machine (another program in the plurality of programs other than the first user program) from continuously accessing a memory page of the stripped first user program. Optionally, a page table corresponding to the first user program may be deleted from a level-2 page table, so that a program in the first virtual machine accesses a memory page of the first user program.

Because some vulnerabilities may occur in an operating system, the malicious program performs some operations (such as privilege escalation) by using these vulnerabilities, and destroys or steals data from a normal user program, to implement an attack. After the virtualization list is set to prohibit all the programs in the first virtual machine from accessing the memory page of the stripped first user program, the malicious program in the first virtual machine cannot access the memory page of the first user program. It means that the first user program cannot be attacked (if a program is to be attacked, a memory page of the program is necessarily accessed). Therefore, according to this implementation, security of an application program is further enhanced.

With reference to the first aspect or any one of the foregoing possible implementations of the first aspect, in a possible implementation of the first aspect, the creating, in the Normal World, a second virtual machine running in the first-level mode includes: allocating, to the second virtual machine, a resource exclusive to the first user program. The exclusive resource optionally includes at least one of a central processing unit (Center Processing Unit, CPU) resource, a peripheral, and a memory.

Some resources are to be used when the first user program accesses the Secure World. If these resources are used by another program, information that is obtained by accessing the Secure World is leaked. For example, if a memory resource in the second virtual machine is shared by the first user program and another program in the Normal World, information that is from the Secure World and that is stored in the memory is likely to be stolen by the another program. Therefore, the resource exclusive to the first user program is allocated to the second virtual machine, to avoid a case in which another program steals, by using the resources used when the first user program accesses the Secure World, information related to the Secure World.

Optionally, when the plurality of user programs need to access the Secure World, a plurality of virtual machines working in the first-level mode may be created. The plurality of virtual machines are in a one-to-one correspondence with a plurality of user programs, and are used by the corresponding user programs to access the Secure World. The plurality of virtual machines each have an exclusive resource.

Therefore, each valid user program is exclusively deployed in an independent virtual machine, so that each user program can have an exclusive secure service channel, and the secure service channel used by the user program to access the Secure World may not be used by another user program, to avoid a case in which the malicious program accesses the Secure World by using the service channel.

In addition, each user program has an independent secure service channel, and no user program accesses the Secure World by using a same secure service channel, to avoid breakdown of a secure service of another user program that is caused because malicious software occupies the same secure service channel for a long time (for example, occupies a common SMC driver).

Optionally, the exclusive resource includes a memory. A memory in the second virtual machine may be used as a memory shared by the first user program and a program in the Secure World.

Therefore, because the memory in the second virtual machine created for the first user program is exclusive, a shared memory used for communication between a user program in the Normal World and a program in the Secure World is isolated at a virtual machine level, and the malicious program in the first virtual machine cannot steal and destroy data in the shared memory used for communication between a user program in the second virtual machine and a user program in the Secure World.

With reference to the first aspect or any one of the foregoing possible implementations of the first aspect, in a possible implementation of the first aspect, the plurality of programs further include an agent program corresponding to the first user program; after the first user program is stripped from the first virtual machine, the agent program is used as an agent of the first user program in the first virtual machine, to trigger the kernel to process a to-be-processed event that needs to be processed by the kernel; and the to-be-processed event is generated when the first user program runs in the second virtual machine.

Therefore, when an event that needs to be processed by the kernel is generated when the first user program runs in the second virtual machine, the user program may be replaced with the agent program corresponding to the first user program in the first virtual machine, and an environment in which the first user program still works in the first virtual machine is created, so that the operating kernel of the first virtual machine can process the event that needs to be processed by the kernel.

With reference to the first aspect or any one of the foregoing possible implementations of the first aspect, in a possible implementation of the first aspect, the method further includes: obtaining the to-be-processed event, where the to-be-processed event needs to be processed by the kernel, and is generated when the first user program runs in the second virtual machine; storing a context of the second virtual machine; and restoring a context of the agent program in the first virtual machine, to trigger the kernel loaded to the first virtual machine to process the to-be-processed event.

Therefore, when the to-be-processed event that needs to be processed by the kernel is obtained, running of the first user program is interrupted by storing the context of the second virtual machine, the context of the agent program is restored, and an environment in which the first user program still works in the first virtual machine may be created without directly switching the first user program to the first virtual machine, so that the operating kernel of the first virtual machine can process the event that needs to be processed by the kernel.

With reference to the first aspect or any one of the foregoing possible implementations of the first aspect, in a possible implementation of the first aspect, the method further includes: after the first virtual machine completes processing of the to-be-processed event, restoring the first user program in the second virtual machine.

Therefore, after the first virtual machine completes processing of the to-be-processed event, the first user program is restored in the second virtual machine, and the first user program can continue to run in the second virtual machine.

With reference to the first aspect or any one of the foregoing possible implementations of the first aspect, in a possible implementation of the first aspect, the to-be-processed event is an interrupt event, a page fault exception event, or a system invocation event.

The interrupt event, the page fault exception event, or the system invocation event is an event that needs to be processed by the kernel. Therefore, when the event is generated when the first user program runs in the second virtual machine, the user program may be replaced with the agent program corresponding to the first user program in the first virtual machine, and an environment in which the first user program still works in the first virtual machine is created, so that the operating kernel of the first virtual machine can process the event.

With reference to the first aspect or any one of the foregoing possible implementations of the first aspect, in a possible implementation of the first aspect, before the stripping the first user program from the first virtual machine, the method further includes: determining that the first user program is a secure user program.

Therefore, when the first user program needs to access the secure world, it is determined that the first user program is the secure user program, to avoid loading a malicious program to a virtual machine working in the second-level mode, and avoid a case in which the malicious program accesses the Secure World.

With reference to the first aspect or any one of the foregoing possible implementations of the first aspect, in a possible implementation of the first aspect, the determining that the first user program is a secure user program includes: obtaining a first hash value group and a second hash value group, where the first hash value group includes at least one first hash value, and the second hash value group includes at least one second hash value; each first hash value is in a one-to-one correspondence with each of at least one data object in the first user program, and each hash value is a current hash value of the data object; and each second hash value is in a one-to-one correspondence with each of the at least one data object in the first user program, and the second hash value is a factory-set hash value of the data object; and when the first hash value group is the same as the second hash value group, determining that the first user program is the secure user program.

A hash value of a data object of a user program does not change in a normal case, and if the hash value is tampered with or used, the hash value of the data object is different from a factory-set hash value. Therefore, it may be accurately determined, by comparing a current hash value of the data object of the user program with the factory-set hash value, that whether the user program is the secure user program.

With reference to the first aspect or any one of the foregoing possible implementations of the first aspect, in a possible implementation of the first aspect, the method is implemented by an ARM processor, the first-level mode is an exception level 1 (Exception Level 1, EL1) mode, and the second-level mode is an exception level 0 (Exception Level 0, EL0) mode.

According to a second aspect, a virtual machine monitor (Virtual Machine Monitor, VMM) is provided, and may include a module or a unit configured to perform the method according to the first aspect or any one of the foregoing optional implementations of the first aspect.

According to a third aspect, a Secure World access apparatus is provided, and includes a memory and a processor, where the memory stores program code that may be used to instruct to perform the method according to the first aspect or any one of the foregoing optional implementations of the first aspect, and when the code is executed, the processor may implement the method according to the first aspect or any one of the foregoing optional implementations of the first aspect.

According to a fourth aspect, a Secure World access system is provided, including: a hardware layer of a Normal World; and a virtual machine monitor running on the hardware layer of the Normal World, and a first virtual machine and a second virtual machine that are created and controlled by the virtual machine monitor, where the first virtual machine is configured to load a plurality of programs in the Normal World, the plurality of programs include a kernel and at least one user program, the kernel runs in a first-level mode, the at least one user program runs in a second-level mode, and the first level is higher than the second level; and the second virtual machine is configured to load a first user program that is in the at least one user program and that is stripped from the first virtual machine, so that the first user program accesses a Secure World by using the second virtual machine, and the second virtual machine runs in the second-level mode. The virtual machine monitor may be configured to perform the method according to the first aspect or any one of the foregoing optional implementations of the first aspect.

According to a fifth aspect, a computer storage medium is provided, where the computer storage medium stores program code, and the program code is used to enable a computer to perform the method according to the first aspect or any one of the foregoing possible implementations of the first aspect.

According to a sixth aspect, a computer program product including an instruction is provided. When the computer program product runs on a computer, the computer performs the method according to the first aspect or any one of the foregoing optional implementations of the first aspect.

### BRIEF DESCRIPTION OF DRAWINGS

FIG. 1 is a schematic block diagram of a current TrustZone architecture;
FIG. 2 is a schematic block diagram of a TrustZone architecture according to an embodiment of the present invention;
FIG. 3 is a schematic flowchart of a Secure World access method according to an embodiment of the present invention;
FIG. 4 shows creation of a second virtual machine and migration of a user program according to an embodiment of the present invention;
FIG. 5 is a schematic flowchart of processing an interrupt event in an architecture shown in FIG. 2;
FIG. 6 is a schematic flowchart of processing a system scheduling event in an architecture shown in FIG. 2;
FIG. 7 is a schematic flowchart of processing a page fault exception event in an architecture shown in FIG. 2;
FIG. 8 is a schematic block diagram of a virtual machine monitor according to an embodiment of the present invention;
FIG. 9 is a schematic block diagram of a Secure World access apparatus according to an embodiment of the present invention; and
FIG. 10 is a schematic block diagram of a Secure World access system according to an embodiment of the present invention.

### DESCRIPTION OF EMBODIMENTS

The following describes technical solutions of this application with reference to accompanying drawings.

An embodiment of the present invention provides a TrustZone architecture shown in FIG. 2.

As shown in FIG. 2, a computer system is physically divided into a Secure World and a Normal World by using a TrustZone technology. An area in the TrustZone is the Secure World, and an area outside the TrustZone is the Normal World.

For the Normal World, there are a rich execution environment (Rich Execution Environment, REE) operating system (Operation System, OS) and a client application (Client Application, CA) (or may be referred to as a user program or the like), for example, a CA1, a CA2, and a CA3 shown in FIG. 2.

Compared with the Normal World, in the Secure World, there are a trusted execution environment (Trusted Execution Environment, TEE) OS and a TA, for example, a TA1, a TA2, and a TA3 shown in FIG. 2.

The TEE OS is responsible for hardware resource abstract management and secure service program scheduling in the Secure World. For example, after receiving a service request from the Normal World and parsing a parameter, the TEE OS schedules a corresponding TA program to complete related secure task processing. The TA is a program that provides a specific secure service function, and runs in the TrustZone in a Secure World process manner.

The TrustZone technology can provide a complete physically-isolated running environment that includes a central processing unit (Center Processing Unit, CPU), a register, a bus, a memory, a cache (cache), a translation lookaside buffer (Translation Lookaside Buffer, LTB), and a peripheral.

For the memory, the Secure World and the Normal World each have memory space. A program in the Normal World cannot access a memory of the Secure World, but a program in the Secure World can access a mapped memory of the Normal World.

If the Normal World needs to transmit a large piece of data (for example, a size of data that cannot be transmitted by using the register) to the Secure World, the large piece of data is transmitted by using a shared memory.

As shown in FIG. 2, in the Normal World, there may be three working modes: an exception level 0 (Exception Level 0, EL0) mode, an exception level 1 (Exception Level 1, EL1) mode, and an exception level 2 (Exception Level 2, EL2) mode. The EL0 mode is a mode used to run a user program. The EL1 mode is a mode used to run an operating system kernel. The EL2 mode is a mode used to run a virtual machine monitor. An exception level of the EL1 mode is higher than that of the EL0 mode, and an exception level of the EL2 mode is higher than that of the EL1 mode.

Optionally, there are three working modes in the Secure World: an exception level 3 (Exception Level 3, EL3) mode, a secure exception level 1 (Secure Exception Level 1, SEL1) mode, and a secure exception level 0 (Secure Exception Level 0, SEL0) mode.

A VMM shown in FIG. 2 may be configured to manage a resource and a context of a VM. Specifically, the VMM may be configured to generate a VM, destruct a VM, initialize a VM, hand over a user program between VMs, and the like.

In the architecture shown in FIG. 2, an SMC driver is no longer deployed in an operating system kernel of the Normal World. To facilitate a user program to access the Secure World, a virtual machine that works in a same level mode as the kernel is created, so that the user program that needs to access the Secure World can access the Secure World by using the newly created virtual machine, but an ordinary program (including a malicious program) cannot obtain a secure service call by invoking the common SMC driver, thereby improving security of the Secure World.

It should be understood that the architecture shown in FIG. 2 does not constitute a limitation on this embodiment of the present invention. For example, a quantity of CAs and a quantity of VMs in the Normal World and a quantity of TAs in the Secure World do not constitute a specific limitation on this application.

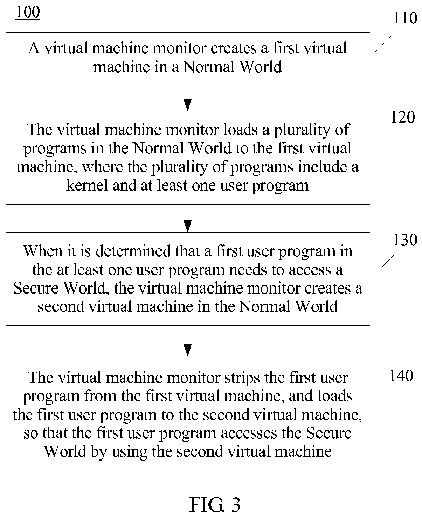

For ease of understanding, the following describes a Secure World access method in this embodiment of the present invention with reference to FIG. 3 by using an example of a scenario shown in FIG. 2.

It should be understood that this embodiment of the present invention may be applied to an architecture of an ARM processor, for example, an architecture of an ARMv8 Cortex A-series processor. However, this embodiment of the present invention is not limited thereto.

FIG. 3 is a schematic flowchart of a Secure World access method 100. The method 100 may be optionally performed by a virtual machine monitor shown in FIG. 2. As shown in FIG. 3, the method 100 includes at least a part of the following content.

110. The virtual machine monitor creates a first virtual machine in a Normal World.

For example, the first virtual machine may be a VM0 shown in FIG. 2. The first virtual machine may be established in a system initialization phase.

120. The virtual machine monitor loads a plurality of programs in the Normal World to the first virtual machine, where the plurality of programs include a kernel and at least one user program.

For example, the plurality of programs include an OS kernel, a CA1, a CA2, and a CA3 shown in FIG 2.

Optionally, in the first virtual machine, the kernel runs in a first-level mode, the at least one user program runs in a second-level mode, and the first level is higher than the second level.

Optionally, the first-level mode may be an EL1 mode shown in FIG. 2, and the second-level mode may be an EL0 mode shown in FIG. 2.

For example, as shown in FIG. 2, the OS kernel may work in the EL1 mode, and the CA1, the CA2, and the CA3 may work in the EL0 mode.

130. When it is determined that a first user program in the at least one user program needs to access a Secure World, the virtual machine monitor creates a second virtual machine in the Normal World.

For example, as shown in FIG. 2, when a user program such as the CA3 needs to access the Secure World, the VMM may create a VM1 working in the EL1 mode, strip the user program CA3 from the VM0, and load the user program CA3 to the VM1.

Optionally, the virtual machine monitor allocates, to the second virtual machine, a resource exclusive to the first user program. The exclusive resource optionally includes at least one of a CPU resource, a peripheral, and a memory.

Some resources are to be used when the first user program accesses the Secure World. If these resources are used by another program, information that is obtained by accessing the Secure World is leaked. For example, if a memory resource in the second virtual machine is shared by the first user program and another program in the Normal World, information that is from the Secure World and that is stored in the memory is likely to be stolen by the another program. Therefore, the resource exclusive to the first user program is allocated to the second virtual machine, to avoid a case in which another program steals, by using the resources used when the first user program accesses the Secure World, information related to the Secure World.

Optionally, when the plurality of user programs need to access the Secure World, a plurality of virtual machines working in the first-level mode may be created. The plurality of virtual machines are in a one-to-one correspondence with a plurality of user programs, and are used by the corresponding user programs to access the Secure World. The plurality of virtual machines each have an exclusive resource.

Therefore, each valid user program is exclusively deployed in an independent virtual machine, so that each user program can have an exclusive secure service channel, and the secure service channel used by the user program to access the Secure World may not be used by another user program, to avoid a case in which a malicious program accesses the Secure World by using the service channel.

In addition, each user program has an independent secure service channel, and no user program accesses the Secure World by using a same secure service channel, to avoid breakdown of a secure service of another user program that is caused because malicious software occupies the same secure service channel for a long time (for example, occupies a common SMC driver).

Optionally, the exclusive resource includes a memory. A memory in the second virtual machine may be used as a memory shared by the first user program and a program in the Secure World.

Therefore, because the memory in the second virtual machine created for the first user program is exclusive, a shared memory used for communication between a user program in the Normal World and a program in the Secure World is isolated at a virtual machine level, and a malicious program in the first virtual machine cannot steal and destroy data in the shared memory used for communication between a user program in the second virtual machine and a user program in the Secure World.

Optionally, the virtual machine monitor may set a virtualization list, to prohibit the kernel and another user program that are loaded to the first virtual machine in which stripping is performed from accessing a memory page in the second virtual machine.

For example, as shown in FIG. 2, the kernel, the CA1, and the CA2 in the VM0 are prohibited from accessing a memory page in the VM1.

Optionally, a page table corresponding to the first user program may be deleted from a level-2 page table, so that a program in the first virtual machine accesses a memory page of the first user program.

Because some vulnerabilities may occur in an operating system, the malicious program performs some operations (such as privilege escalation) by using these vulnerabilities, and destroys or steals data from a normal user program, to implement an attack. After the virtualization list is set to prohibit all programs in the first virtual machine from accessing the memory page of the stripped first user program, the malicious program in the first virtual machine cannot access the memory page of the first user program. It means that the first user program cannot be attacked (if a program is to be attacked, a memory page of the program is necessarily accessed). Therefore, according to this implementation, security of an application program is further enhanced.

Optionally, when the first user program needs to access the Secure World, the virtual machine monitor determines whether the first user program is a secure user program. When determining that the first user program is the secure user program, the virtual machine monitor strips the first user program from the first virtual machine, and loads the first user program to the created second virtual machine.

Specifically, when a user program needs to access the Secure World, the first virtual machine may be trapped in the virtual machine monitor. The virtual machine monitor may store a context of the first virtual machine, trigger a dynamic measurement function of the Secure World, and measure integrity and validity of the user program, to ensure security.

Optionally, an action of determining that the first user program is the secure user program may be performed before the first user program is stripped from the first virtual machine.

Specifically, the action of determining that the first user program is the secure user program may be performed before the first user program is stripped from the first virtual machine and after the second virtual machine working in the first-level mode is created in the Normal World.

Alternatively, the action of determining that the first user program is the secure user program may be performed before the second virtual machine working in the first-level mode is created in the Normal World and after the first user program is loaded to the first virtual machine.

Further, in addition to integrity and security of a user program that currently needs to access the Secure World, integrity and validity of another program may also need to be measured, for example, integrity and security of an agent program and/or another user program may be measured.

Optionally, dynamic measurement is a dynamic security monitoring function deployed in a TrustZone, and may be used to check a data object that does not change during program running, so as to ensure, based on a hash value of a check object, that there is no invalid tampering in a running process.

Specifically, the virtual machine monitor may obtain a first hash value group (including at least one first hash value) and a second hash value group (including at least one second hash value). The first hash value is a current hash value of at least one data object (for example, a user program code segment, or a dynamic link library required for running the user program) in the first user program, and the second hash value is a factory-set hash value of the data object (for security, the factory-set hash value is placed in a memory area of the Secure World). When the first hash value group is the same as the second hash value group (to be specific, hash values of each data object are the same), determine that the first user program is the secure user program.

A hash value of a data object of a user program does not change in a normal case, and if the hash value is tampered with or used, the hash value of the data object is different from a factory-set hash value. Therefore, it may be accurately determined, by comparing a current hash value of the data object of the user program with the factory-set hash value, that whether the user program is the secure user program.

Optionally, in the architecture shown in FIG. 2, a process in the EL0 mode may be trapped in the VMM in the EL2 mode by accessing an ID register. For example, trapping is triggered by accessing a CTR_EL0 register in an ID register group 2 (where CRT_EL0 represents a register in the ID register group 2, and CTR represents a count register (Count Register, CTR)). Optionally, before the trapping, a corresponding bit of an HCR EL2 register (where the HCR_EL2 register is a virtualization control register controlled by the VMM, and HCR represents a hypervisor configuration register (Hypervisor Configuration Register, HCR)) may be set in the VMM. For example, a TID2 bit of the HCR_EL2 is set to 1 in the VMM.

Optionally, in the architecture shown in FIG. 2, a program (for example, an operating system kernel) in the EL1 mode may be trapped in the VMM in an instruction triggering manner, and may be trapped in the VMM in the EL2 mode by accessing an HVC instruction.

140. The first user program is stripped from the first virtual machine, and is loaded to the second virtual machine, so that the first user program accesses the Secure World by using the second virtual machine.

Specifically, after determining that the first user program is a valid and secure program, the virtual machine monitor may migrate the first user program, in other words, strip the first user program from the first virtual machine, and load the first user program to the second virtual machine, so that the first user program can invoke an SMC driver in the second virtual machine to access the Secure World. For example, the first user program may apply for a shared memory by using the SMC driver, and interact with a TA in the Secure World through the shared memory.

Optionally, the second virtual machine may access the Secure World by calling an SMC instruction.

"Stripping" in this application is "removing". Essentially, the first user program does not run in the first virtual machine, but runs in the second virtual machine. It may be considered that a code segment is "cut" from the first virtual machine into the second virtual machine.

Optionally, in this embodiment of the present invention, the first user program may be stripped from the first virtual machine and loaded to the second virtual machine by using a plurality of implementations.

In an implementation, the virtual machine monitor may copy a memory page of the first user program in the first virtual machine (including code segments of various programs, dynamic link libraries required for running various programs, or the like) into the second virtual machine, and modify a mapping relationship of a memory page in the first virtual machine, so that the memory page of the first user program in the first virtual machine is recycled.

In another implementation, the virtual machine monitor may directly map the memory page of the first user program in the first virtual machine to the second virtual machine (to be specific, an address of the memory page in a physical memory is mapped to an address in the second virtual machine).

In this embodiment of the present invention, a user program may be stripped from a virtual machine and loaded to another virtual machine in another manner. For details, refer to the prior art, and details are not described herein.

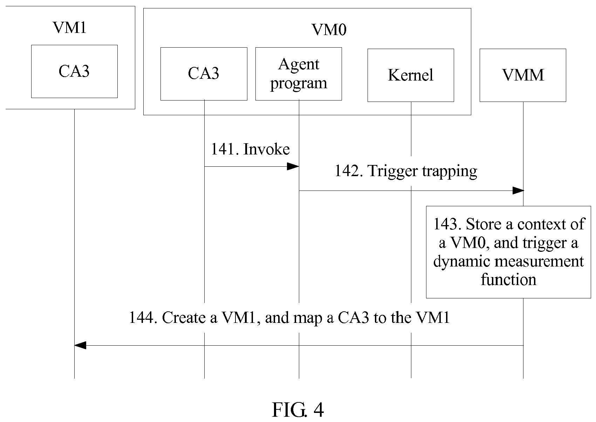

For ease of understanding, the following describes, with reference to FIG. 4 by using an example of the scenario shown in FIG. 2, how to create a second virtual machine and migrate a user program.

141. A CA3 invokes an initialization interface of an agent program.

142. The agent program triggers, by reading a CTR_EL0 register in an ID group 2, a CPU to be trapped in a VMM in an EL2 mode.

143. After the CPU is trapped in the VMM, the VMM stores a context of a virtual machine VM0, triggers a dynamic measurement function of a Secure World, and measures integrity and validity of the CA3, to ensure security.

144. The VMM creates a new virtual machine VM1, and the VMM migrates the CA3 to the virtual machine VM1 in an EL1 mode, to continue to run the CA3.

Optionally, in this embodiment of the present invention, the plurality of programs loaded to the first virtual machine further include an agent program corresponding to a user program. After the user program is stripped from the first virtual machine, the agent program is used as an agent of the user program in the first virtual machine, to execute a to-be-processed event that is generated when the user program runs in the second virtual machine.

Optionally, in this embodiment of the present invention, the agent program may be in a one-to-one correspondence with the user process. The agent program may be used as an agent of the corresponding user process. Specifically, when the user program is loaded to the second virtual machine, the agent program may be used as the agent of the user program.

Optionally, in this embodiment of the present invention, the virtual machine monitor may further obtain a to-be-processed event for the first user program, where the to-be-processed event needs to be processed by the kernel; store a context of the second virtual machine; and restore a context of the agent program, so that the kernel processes the to-be-processed event.

Optionally, in this embodiment of the present invention, after the first virtual machine completes processing of the to-be-processed event, the virtual machine monitor restores the first user program in the second virtual machine.

Optionally, the agent program may be in the second-level mode, for example, the EL0 mode shown in FIG. 2.

Optionally, the to-be-processed event is an interrupt event, a page fault exception event, or a system invocation event.

Therefore, in this embodiment of the present invention, when a virtual machine in which a currently running user program is located has no operating system kernel, an agent program may be used as an agent of the user program, and the interrupt event, the page fault exception event, or the system invocation event are processed by using an operating kernel of an original virtual machine.

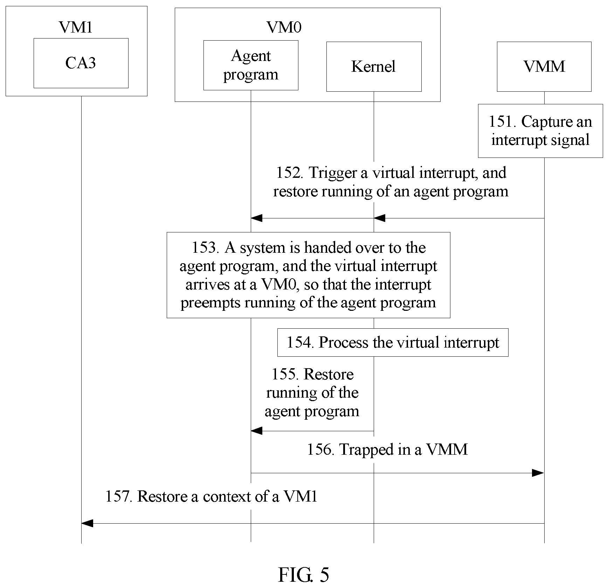

For ease of understanding, the following respectively describes processing procedures when to-be-processed events are an interrupt event, a page fault exception event, and a system invocation event with reference to FIG. 5 to FIG. 7 by using an example of the architecture shown in FIG. 2.

FIG. 5 is a schematic diagram of a processing procedure when a to-be-processed event is an interrupt event.

151. A VMM obtains an interrupt signal triggered by hardware, and at this time, a CA3 is running in a current system.

152. The VMM triggers a virtual interrupt, and restores running of an agent program of the CA3.

153. The system is switched to the agent program; the virtual interrupt arrives at a virtual machine VM0, and the interrupt preempts the running of the agent program.

154. A kernel of the VM0 processes the virtual interrupt.

155. After completing interrupt processing, the VM0 restores the running of the agent program.

156. The agent program is trapped into the VMM.

157. The VMM restores an interrupted context of a VM1.

Therefore, in the solution shown in FIG. 5, when the current system runs in the VM1, the VMM may restore processing of the agent program when the hardware triggers the interrupt signal, use the agent program as an agent of a first user program, perform interrupt processing subsequently, and restore the agent program after the interrupt processing is performed, so that even if in a new architecture, a virtual machine in which a running program is located has no operating system kernel, interrupt processing can be still performed.

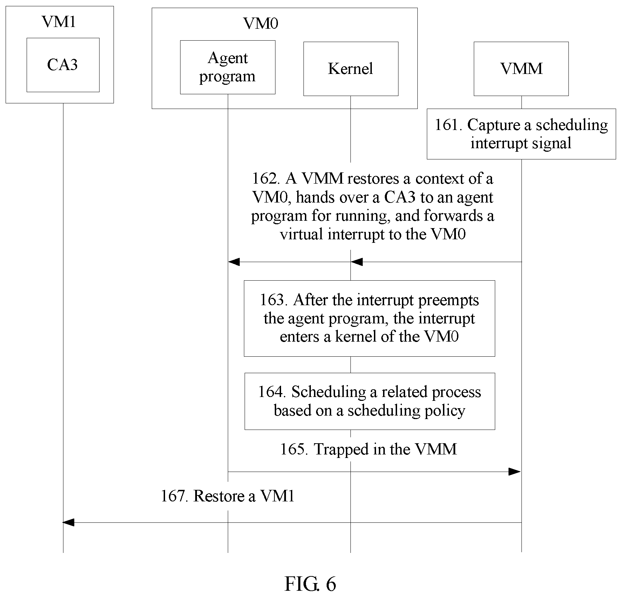

FIG. 6 is a schematic diagram of a processing procedure when a to-be-processed event is a system scheduling event.

161. When a CA3 runs in a system, if a scheduling interrupt occurs, the interrupt is captured by a VMM.

162. The VMM restores a context of a VM0, switches from the CA3 to an agent program for running, and forwards a virtual interrupt to the VM0.

163. After preempting the agent program, the interrupt enters a kernel of the VM0.

164. A scheduling module of the kernel executes, based on a scheduling policy of the scheduling module of the kernel, a related process for running.

165. After the agent program is rescheduled, the agent program is trapped into the VMM.

166. The VMM restores a VM1, to be specific, switches the CA3 to the VM1.

Therefore, in the architecture in this application, the VM1 in which a CA1 is located has no operating system kernel, and cannot perform self-scheduling, for example, time slicing for executing the CA1 cannot be determined, and the CA1 needs to comply with a scheduling policy of the VM0. Therefore, in the solution shown in FIG. 6, the kernel of the VM0 may schedule the CA1 by using the agent program.

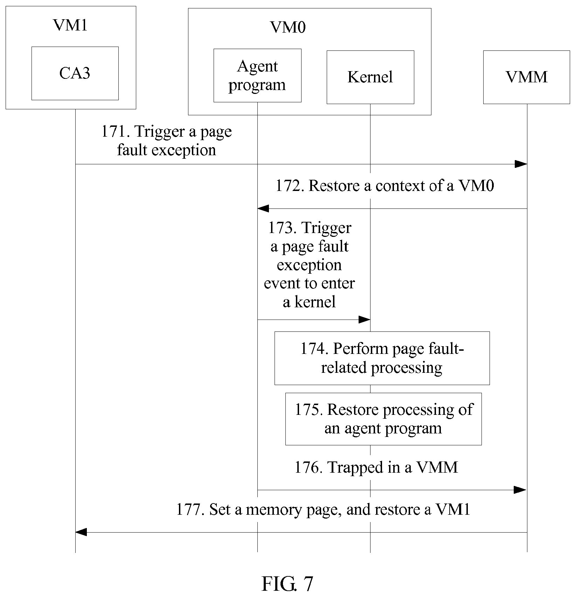

FIG. 7 is a schematic diagram of a processing procedure when a to-be-processed event is a page fault exception event.

171. An exception that is triggered after a page fault of a CA1 occurs is taken over by a VMM.

172. When the VMM identifies that a page fault exception occurs in the CA3, the VMM restores a context of an agent program of the CA3.

173. The agent program triggers the page fault exception event to re-enter a kernel of a VM0.

174. A page fault processing program of the kernel performs page fault-related processing.

175. The kernel restores processing of the agent program.

176. The agent program is trapped in the VMM.

177. After setting a corresponding memory page, the VMM restores a VM1, to be specific, switches the CA3 to the VM1.

Therefore, in the solution shown in FIG. 7, when a current system runs in the VM1, the agent program of the CA3 in the VM0 may be restored after the page fault exception event occurs in the CA3 in the VM1, and the operating system kernel of the VM0 processes the page fault exception event, so that even if a virtual machine in which a running program is located has no operating system kernel in a new architecture, the page fault exception event can be still processed.

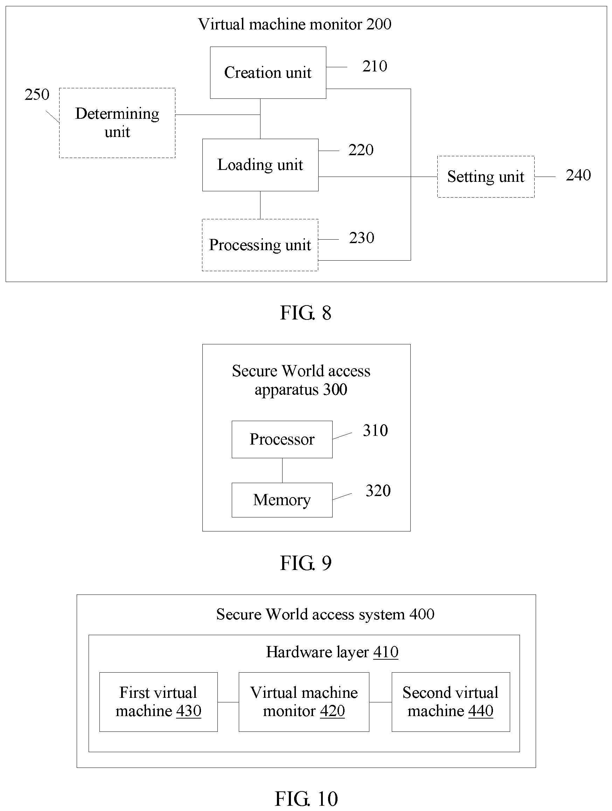

FIG. 8 is a schematic block diagram of a virtual machine monitor 200 according to an embodiment of the present invention. As shown in FIG. 8, the virtual machine monitor 200 includes a creation unit 210 and a loading unit 220.

The creation unit 210 is configured to create a first virtual machine in a Normal World. The loading unit 220 is configured to load a plurality of programs in the Normal World to the first virtual machine. The plurality of programs include a kernel and at least one user program, the kernel runs in a first-level mode, the at least one user program runs in a second-level mode, and the first level is higher than the second level. The creation unit 210 is further configured to: when a first user program in the at least one user program needs to access a Secure World, create, in the Normal World, a second virtual machine running in the first-level mode. The loading unit 220 is further configured to: strip the first user program from the first virtual machine, and load the first user program to the second virtual machine, so that the first user program accesses the Secure World by using the second virtual machine.

Optionally, as shown in FIG. 8, the virtual machine monitor 200 further includes a setting unit 230, configured to: set a virtualization list, to prohibit another program that is in the first virtual machine from which the first user program is stripped and that is other than the first user program from accessing a memory page of the first user program stripped from the first virtual machine.

Optionally, the creation unit 210 is further configured to allocate, to the second virtual machine, a resource exclusive to the first user program.

Optionally, the plurality of programs further include an agent program. After the first user program is stripped from the first virtual machine, the agent program is used as an agent of the first user program in the first virtual machine, to trigger the kernel to process a to-be-processed event that needs to be processed by the kernel. The to-be-processed event is generated when the first user program runs in the second virtual machine.

Optionally, as shown in FIG. 8, the virtual machine monitor 200 further includes a processing unit 240, configured to: when the first user program runs, obtain the to-be-processed event for the first user program, where the to-be-processed event needs to be processed by the kernel; store a context of the second virtual machine; and restore running of the agent program in the first virtual machine, to trigger the kernel to process the to-be-processed event that needs to be processed by the kernel. The to-be-processed event is generated when the first user program runs in the second virtual machine.

Optionally, the processing unit 240 is further configured to: after the first virtual machine completes processing of the to-be-processed event, restore the first user program in the second virtual machine.

Optionally, the to-be-processed event is an interrupt event, a page fault exception event, or a system invocation event.

Optionally, as shown in FIG. 8, the virtual machine monitor 200 further includes a determining unit 250, configured to determine that the first user program is a secure user program.

Optionally, the determining unit 250 is further configured to: obtain a first hash value group and a second hash value group, where the first hash value group includes at least one first hash value, and the second hash value group includes at least one second hash value; each first hash value is in a one-to-one correspondence with each of at least one data object in the first user program, and each hash value is a current hash value of the data object; and each second hash value is in a one-to-one correspondence with each of the at least one data object in the first user program, and the second hash value is a factory-set hash value of the data object; and when the first hash value group is the same as the second hash value group, determine that the first user program is the secure user program.

It should be understood that the foregoing and other operations and/or functions of each unit in the virtual machine monitor 200 in this embodiment of the present invention are used to respectively implement the corresponding procedure of the virtual machine monitor in the method 100 in FIG. 3. For brevity, details are not described again herein.

FIG. 9 is a schematic block diagram of a Secure World access apparatus 300 according to an embodiment of the present invention. The apparatus 300 includes a processor 310 and a memory 320.

The memory 320 is configured to store a program, where the program includes code.

The processor 310 is configured to execute the program code in the memory 320.

Optionally, when the code is executed, the processor 310 may implement operations performed by the virtual machine monitor in the method 100 in FIG. 3. For brevity, details are not described herein.

FIG. 10 is a schematic block diagram of a Secure World access system 400. As shown in FIG. 10, the system 400 includes a hardware layer 410 of a Normal World; and a virtual machine monitor 420 running on the hardware layer of the Normal World, and a first virtual machine 430 and a second virtual machine 440 that are created and controlled by the virtual machine monitor.

The first virtual machine 430 is configured to load a plurality of programs in the Normal World, the plurality of programs include a kernel and at least one user program, the kernel runs in a first-level mode, the at least one user program runs in a second-level mode, and the first level is higher than the second level. The second virtual machine is configured to load a first user program that is in the at least one user program and that is stripped from the first virtual machine, so that the first user program accesses a Secure World by using the second virtual machine, and the second virtual machine runs in the second-level mode.

Optionally, the hardware layer 410 may include a processor, a communications interface, a memory, and the like.

It should be understood that for corresponding descriptions of the virtual machine monitor 420, the first virtual machine 430, and the second virtual machine 440, refer to the method 100 shown in FIG. 3. For brevity, details are not described herein.

It should be understood that, in this embodiment of the present invention, the processor may be a central processing unit (Central Processing Unit, CPU), or the processor may be another general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general purpose processor may be a microprocessor, or the processor may be any conventional processor or the like.

The memory may include a read-only memory and a random access memory, and provide an instruction and data for the processor. A part of the memory may further include a nonvolatile random access memory. For example, the memory may further store information about a device type.

The communications interface may be configured to implement a signal sending and receiving function, for example, a frequency modulation and demodulation function or an up-conversion or down-conversion function.

In an implementation process, at least one step of the foregoing method may be completed by using an integrated logic circuit of hardware in the processor, or the integrated logic circuit may complete the at least one step after being driven by an instruction in a form of software. Therefore, the communications apparatus may be a chip or a chip group. The steps of the method disclosed with reference to the embodiments of the present invention may be directly performed by a hardware processor, or may be performed by using a combination of hardware module and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

All or some of the foregoing embodiments may be implemented through software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (Digital Subscriber Line, DSL)) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD), a semiconductor medium (for example, a solid state disk (Solid State Disk, SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A Secure World access method, comprising:
creating a first virtual machine in a Normal World;
loading a plurality of programs in the Normal World to the first virtual machine, wherein the plurality of programs comprise a kernel and at least one user program, the kernel runs in a first-level mode, the at least one user program runs in a second-level mode, and the first level is higher than the second level;
**characterized in that** when it is determined that a first user program in the at least one user program needs to access a Secure World, creating, in the Normal World, a second virtual machine running in the first-level mode; and
stripping the first user program from the first virtual machine, and loading the first user program to the second virtual machine, so that the first user program accesses the Secure World by using the second virtual machine and the first user program directly receives information in the Secure World by using the second virtual machine.

2. The method according to claim 1, wherein the method further comprises:
setting a virtualization list, to prohibit one or more programs in the plurality of programs other than the first user program from accessing a memory page of the stripped first user program.

3. The method according to claim 1 or 2, wherein the creating, in the Normal World, a second virtual machine running in the first-level mode comprises:
allocating, to the second virtual machine, a resource exclusive to the first user program.

4. The method according to any one of claims 1 to 3, wherein the plurality of programs further comprise an agent program corresponding to the first user program; after the first user program is stripped from the first virtual machine, the agent program is used as an agent of the first user program in the first virtual machine, to trigger the kernel to process a to-be-processed event that needs to be processed by the kernel; and the to-be-processed event is generated when the first user program runs in the second virtual machine.

5. The method according to claim 4, wherein the method further comprises:
obtaining the to-be-processed event, wherein the to-be-processed event needs to be processed by the kernel, and is generated when the first user program runs in the second virtual machine;
storing a context of the second virtual machine; and
restoring a context of the agent program in the first virtual machine, to trigger the kernel loaded to the first virtual machine to process the to-be-processed event.

6. The method according to claim 5, wherein the method further comprises:
after the first virtual machine completes processing of the to-be-processed event, restoring the first user program in the second virtual machine.

7. The method according to any one of claims 4 to 6, wherein the to-be-processed event is an interrupt event, a page fault exception event, or a system invocation event.

8. The method according to any one of claims 1 to 7, wherein before the stripping the first user program from the first virtual machine, the method further comprises:
determining that the first user program is a secure user program.

9. The method according to claim 8, wherein the determining that the first user program is a secure user program comprises:
obtaining a first hash value group and a second hash value group, wherein the first hash value group comprises at least one first hash value, and the second hash value group comprises at least one second hash value, wherein
each first hash value is in a one-to-one correspondence with each of at least one data object in the first user program, and each hash value is a current hash value of the data object; and
each second hash value is in a one-to-one correspondence with each of the at least one data object in the first user program, and the second hash value is a factory-set hash value of the data object; and
when the first hash value group is the same as the second hash value group, determining that the first user program is the secure user program.

10. The method according to any one of claims 1 to 9, wherein the method is implemented by an advanced reduced instruction set computing machines ARM processor, the first-level mode is an exception level EL1 mode, and the second-level mode is an EL0 mode.

11. A Secure World access apparatus, (300) comprising a processor (310) and a memory (320), wherein the memory (320) is configured to store an instruction, and the processor (310) is configured to call the instruction stored in the memory (320) to perform the method according to any one of claims 1 to 10.

## Patentansprüche

1. Verfahren zum Zugreifen auf eine Sichere Welt, umfassend:
Erschaffen einer ersten virtuellen Maschine in einer Normalen Welt;
Laden einer Vielzahl von Programmen in der Normalen Welt in die erste virtuelle Maschine, wobei die Vielzahl von Programmen einen Kernel und mindestens ein Benutzerprogramm umfasst, wobei der Kernel in einem Modus einer ersten Ebene abläuft, wobei das mindestens eine Benutzerprogramm in einem Modus einer zweiten Ebene abläuft und wobei die erste Ebene höher als die zweite Ebene ist;
**dadurch gekennzeichnet, dass**
wenn ermittelt wird, dass ein erstes Benutzerprogramm aus dem mindestens einen Benutzerprogramm auf die Sichere Welt zugreifen muss, Erschaffen in der Normalen Welt einer zweiten virtuellen Maschine, die in dem Modus der ersten Ebene abläuft; und
Abziehen des ersten Benutzerprogramms aus der ersten virtuellen Maschine, und Laden des ersten Benutzerprogramms in die zweite virtuelle Maschine, sodass das erste Benutzerprogramm auf die Sichere Welt zugreift, indem die zweite virtuelle Maschine verwendet wird, und das erste Benutzerprogramm Informationen direkt in der Sicheren Welt empfängt, indem die zweite virtuelle Maschine verwendet wird.

2. Verfahren nach Anspruch 1, wobei das Verfahren außerdem umfasst:
Einstellen einer Virtualisierungsliste, um zu verbieten, dass ein oder mehrere Programme aus der Vielzahl von Programmen, die verschieden von dem ersten Benutzerprogramm sind, auf eine Speicherseite des abgezogenen ersten Benutzerprogramms zugreifen.

3. Verfahren nach Anspruch 1 oder 2, wobei das Erschaffen, in der Normalen Welt, einer zweiten virtuellen Maschine, die in dem Modus der ersten Ebene abläuft, umfasst: Zuteilen einer Ressource, die exklusiv für das erste Benutzerprogramm ist, zu der zweiten virtuellen Maschine.

4. Verfahren nach einem der Ansprüche 1 bis 3, wobei die Vielzahl von Programmen außerdem ein Agent-Programm umfasst, das dem ersten Benutzerprogramm entspricht; wobei das Agent-Programm, nachdem das erste Benutzerprogramm aus der ersten virtuellen Maschine abgezogen wurde, als ein Agent des ersten Benutzerprogramms in der ersten virtuellen Maschine verwendet wird, um den Kernel so zu triggern, dass ein zu verarbeitendes Ereignis verarbeitet wird, das von dem Kernel verarbeitet werden muss; und wobei das zu verarbeitende Ereignis erzeugt wird, wenn das erste Benutzerprogramm in der zweiten virtuellen Maschine abläuft.

5. Verfahren nach Anspruch 4, wobei das Verfahren außerdem umfasst:
Erhalten des zu verarbeitenden Ereignisses, wobei das zu verarbeitende Ereignis durch den Kernel verarbeitet werden muss und erzeugt wird, wenn das erste Benutzerprogramm in der zweiten virtuellen Maschine abläuft;
Speichern eines Kontexts der zweiten virtuellen Maschine; und
Wiederherstellen eines Kontexts des Agent-Programms in der ersten virtuellen Maschine, um den Kernel zu triggern, der in die erste virtuelle Maschine geladen wurde, um das zu verarbeitende Ereignis zu verarbeiten.

6. Verfahren nach Anspruch 5, wobei das Verfahren außerdem umfasst:
nachdem die erste virtuelle Maschine ein Verarbeiten des zu verarbeitenden Ereignisses abgeschlossen hat, Wiederherstellen des ersten Benutzerprogramms in der zweiten virtuellen Maschine.

7. Verfahren nach einem der Ansprüche 4 bis 6, wobei das zu verarbeitende Ereignis ein Unterbrechungsereignis, ein Seitenfehlerausnahmeereignis oder ein Systemaufrufereignis ist.

8. Verfahren nach einem der Ansprüche 1 bis 7, wobei das Verfahren vor dem Abziehen des ersten Benutzerprogramms aus der ersten virtuellen Maschine außerdem umfasst:
Ermitteln, dass das erste Benutzerprogramm ein sicheres Benutzerprogramm ist.

9. Verfahren nach Anspruch 8, wobei das Ermitteln, dass das erste Benutzerprogramm ein sicheres Benutzerprogramm ist, umfasst:
Erhalten einer ersten Hashwert-Gruppe und einer zweiten Hashwert-Gruppe, wobei die erste Hashwert-Gruppe mindestens einen ersten Hashwert umfasst, und wobei die zweite Hashwert-Gruppe mindestens einen zweiten Hashwert umfasst, wobei:
jeder erste Hashwert in einer Eins-zu-Eins-Entsprechung mit jedem von mindestens einem Datenobjekt in dem ersten Benutzerprogramm ist, und jeder Hashwert ein aktueller Hashwert des Datenobjekts ist; und
jeder zweite Hashwert in einer Eins-zu-Eins-Entsprechung mit jedem von dem mindestens einen Datenobjekt in dem ersten Benutzerprogramm ist, und der zweite Hashwert ein werksseitig eingestellter Hashwert des Datenobjekts ist; und
wenn die erste Hashwert-Gruppe die gleiche ist wie die zweite Hashwert-Gruppe, Ermitteln dass das erste Benutzerprogramm das sichere Benutzerprogramm ist.

10. Verfahren nach einem der Ansprüche 1 bis 9, wobei das Verfahren durch einen Prozessor einer Computermaschine mit einem fortschrittlichen reduzierten Befehlssatz (Advanced Reduced instruction set computing Machines processor ARM-Prozessor) umgesetzt wird, wobei der Modus der ersten Ebene ein Modus einer Ausnahmeebene, EL1-Modus, ist, und wobei der Modus der zweiten Ebene ein EL0-Modus ist.

11. Vorrichtung zum Zugreifen auf eine Sichere Welt, (300) die einen Prozessor (310) und einen Speicher (320) umfasst, wobei der Speicher (320) konfiguriert ist zum Speichern eines Befehlssatzes, und wobei der Prozessor (310) konfiguriert ist zum Aufrufen des Befehlssatzes, der in dem Speicher (320) gespeichert ist, um das Verfahren nach einem der Ansprüche 1 bis 10 durchzuführen.

## Revendications

1. Procédé d'accès à un monde sécurisé, comprenant :
la création d'une première machine virtuelle dans un monde normal ;
le chargement d'une pluralité de programmes dans le monde normal vers la première machine virtuelle, dans lequel la pluralité de programmes comprend un noyau et au moins un programme utilisateur, le noyau s'exécute dans un mode de premier niveau, l'au moins un programme utilisateur s'exécute dans un mode de second niveau, et le premier niveau est supérieur au second niveau ;
**caractérisé en ce que**
lorsqu'il est déterminé qu'un premier programme utilisateur dans l'au moins un programme utilisateur a besoin d'accéder à un monde sécurisé, la création, dans le monde normal, d'une seconde machine virtuelle fonctionnant dans le mode de premier niveau ; et
la suppression du premier programme utilisateur de la première machine virtuelle, et le chargement du premier programme utilisateur vers la seconde machine virtuelle, de sorte que le premier programme utilisateur accède au monde sécurisé en utilisant la seconde machine virtuelle et que le premier programme utilisateur reçoive directement des informations dans le monde sécurisé en utilisant la seconde machine virtuelle.

2. Procédé selon la revendication 1, le procédé comprenant en outre :
la configuration d'une liste de virtualisation, pour empêcher qu'un ou plusieurs programmes de la pluralité de programmes autres que le premier programme utilisateur n'accèdent à une page de mémoire du premier programme utilisateur supprimé.

3. Procédé selon la revendication 1 ou 2, dans lequel la création, dans le monde normal, d'une seconde machine virtuelle fonctionnant dans le mode de premier niveau comprend :
l'allocation, à la seconde machine virtuelle, d'une ressource exclusive au premier programme utilisateur.

4. Procédé selon l'une quelconque des revendications 1 à 3, dans lequel la pluralité de programmes comprend en outre un programme agent correspondant au premier programme utilisateur ; après que le premier programme utilisateur a été supprimé de la première machine virtuelle, le programme agent est utilisé comme un agent du premier programme utilisateur dans la première machine virtuelle, pour déclencher le noyau afin de traiter un événement à traiter qui doit être traité par le noyau ; et l'événement à traiter est généré lorsque le premier programme utilisateur s'exécute dans la seconde machine virtuelle.

5. Procédé selon la revendication 4, le procédé comprenant en outre :
l'obtention de l'événement à traiter, l'événement à traiter devant être traité par le noyau, et étant généré lorsque le premier programme utilisateur s'exécute dans la seconde machine virtuelle ;
le stockage d'un contexte de la seconde machine virtuelle ; et
la restauration d'un contexte du programme agent dans la première machine virtuelle, pour déclencher le noyau chargé vers la première machine virtuelle afin de traiter l'événement à traiter.

6. Procédé selon la revendication 5, le procédé comprenant en outre :
après que la première machine virtuelle a terminé le traitement de l'événement à traiter, la restauration du premier programme utilisateur dans la seconde machine virtuelle.

7. Procédé selon l'une quelconque des revendications 4 à 6, dans lequel l'événement à traiter est un événement d'interruption, un événement d'exception de défaut de page, ou un événement d'invocation de système.

8. Procédé selon l'une quelconque des revendications 1 à 7, avant la suppression du premier programme utilisateur de la première machine virtuelle, le procédé comprenant en outre :
la détermination que le premier programme utilisateur est un programme utilisateur sécurisé.

9. Procédé selon la revendication 8, dans lequel la détermination que le premier programme utilisateur est un programme utilisateur sécurisé comprend :
l'obtention d'un premier groupe de valeurs de hachage et d'un second groupe de valeurs de hachage, le premier groupe de valeurs de hachage comprenant au moins une première valeur de hachage, et le second groupe de valeurs de hachage comprenant au moins une seconde valeur de hachage, dans lequel
chaque première valeur de hachage est en correspondance biunivoque avec chacun d'au moins un objet de données dans le premier programme utilisateur, et chaque valeur de hachage est une valeur de hachage actuelle de l'objet de données ; et chaque seconde valeur de hachage est en correspondance biunivoque avec chacun de l'au moins un objet de données dans le premier programme utilisateur, et la seconde valeur de hachage est une valeur de hachage réglée en usine de l'objet de données ; et lorsque le premier groupe de valeurs de hachage est le même que le second groupe de valeurs de hachage, la détermination que le premier programme utilisateur est le programme utilisateur sécurisé.

10. Procédé selon l'une quelconque des revendications 1 à 9, le procédé étant mis en œuvre par un processeur ARM d'ordinateurs à jeu d'instructions réduit avancé, le mode de premier niveau étant un mode de niveau d'exception EL1, et le mode de second niveau étant un mode EL0.

11. Appareil d'accès au monde sécurisé (300), comprenant un processeur (310) et une mémoire (320), dans lequel la mémoire (320) est configurée pour stocker une instruction, et le processeur (310) est configuré pour appeler l'instruction stockée dans la mémoire (320) pour exécuter le procédé selon l'une quelconque des revendications 1 à 10.
